(19) Europäisches Patentamt
European Patent Office
Office européen des brevets

(11) **EP 3 846 095 B1**

(12) **FASCICULE DE BREVET EUROPEEN**

(45) Date de publication et mention
de la délivrance du brevet:
**23.04.2025 Bulletin 2025/17**

(21) Numéro de dépôt: **20215159.3**

(22) Date de dépôt: **17.12.2020**

(51) Classification Internationale des Brevets (IPC):
**G06Q 40/12** (2023.01)     **G06Q 10/04** (2023.01)
**G06Q 50/06** (2024.01)

(52) Classification Coopérative des Brevets (CPC):
**G06Q 10/04; G06Q 40/12; G06Q 50/06;**
Y02E 10/56; Y02P 80/10

(54) **PROCÉDÉ DE GESTION AUTOMATIQUE D'UN FLUX D'ÉNERGIE ÉLECTRIQUE**

AUTOMATISCHES VERFAHREN ZUR STEUERUNG EINES ELEKTRISCHEN STROMFLUSSES

METHOD FOR AUTOMATICALLY MANAGING A FLOW OF ELECTRICAL ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2019 FR 1915737**

(43) Date de publication de la demande:
**07.07.2021 Bulletin 2021/27**

(73) Titulaire: **Commissariat à l'Energie Atomique et aux Energies Alternatives**
**75015 Paris (FR)**

(72) Inventeurs:
• **HA, Duy Long**
**38054 GRENOBLE CEDEX 09 (FR)**
• **ALBACHRONY, Moch-Arief**
**38054 GRENOBLE CEDEX 09 (FR)**
• **BOURIEN, Yves-Marie**
**38054 GRENOBLE CEDEX 09 (FR)**
• **TRAN, Quoc-Tuan**
**38054 GRENOBLE CEDEX 09 (FR)**

(74) Mandataire: **Cabinet Camus Lebkiri**
**25 rue de Maubeuge**
**75009 Paris (FR)**

(56) Documents cités:
• **SOLÈNE GOY ET AL: "Load Management in Buildings", URBAN ENERGY SYSTEMS FOR LOW-CARBON CITIES (EXCERPT), 30 November 2018 (2018-11-30), pages 1/14 - 6/14, XP055723126, ISBN: 978-0-12-811553-4, Retrieved from the Internet <URL:https://www. sciencedirect.com/topics/ earth-and-planetary-sciences/ demand-side-management> [retrieved on 20200817]**
• **STEPHANT MATTHIEU ET AL: "A survey on energy management and blockchain for collective self-consumption", 2018 7TH INTERNATIONAL CONFERENCE ON SYSTEMS AND CONTROL (ICSC), IEEE, 24 October 2018 (2018-10-24), pages 237 - 243, XP033476642, DOI: 10.1109/ICOSC.2018.8587812**
• **RODRIGO VERSCHAE ET AL: "A cooperative distributed protocol for coordinated energy management in prosumer communities", 1 January 2015 (2015-01-01), pages 1 - 7, XP055721977, Retrieved from the Internet <URL:https://pdfs.semanticscholar.org/a0d5/ 82608cb8c25d9d87632e339369767e4d1a13.pdf? _g a=2.57340010.1139601154.1597226377-10191384 04.1597226377> [retrieved on 20200812]**

- PLAZA CAROLINE ET AL: "Distributed Solar Self-Consumption and Blockchain Solar Energy Exchanges on the Public Grid Within an Energy Community", 2018 IEEE INTERNATIONAL CONFERENCE ON ENVIRONMENT AND ELECTRICAL ENGINEERING AND 2018 IEEE INDUSTRIAL AND COMMERCIAL POWER SYSTEMS EUROPE (EEEIC / I&CPS EUROPE), IEEE, 12 June 2018 (2018-06-12), pages 1 - 4, XP033422648, DOI: 10.1109/EEEIC.2018.8494534

- CHRISTOPHE COURTOIS: "Sunchain", 7 March 2018 (2018-03-07), pages 1 - 23, XP055649190, Retrieved from the Internet <URL:https://www.enerplan.asso.fr/medias/publication/3_180307_ppt_sunchain_tecsol.pdf> [retrieved on 20191204]

## Description

## DOMAINE TECHNIQUE DE L'INVENTION

La présente invention concerne un procédé de gestion automatique d'un flux d'énergie électrique permettant de distribuer de façon équitable et optimale l'énergie électrique entre des entités productrices de cette énergie et des entités consommatrices.

L'invention trouve des applications dans les domaines de la production et de la distribution d'énergie électrique. Elle trouve, en particulier, des applications dans le domaine de la production d'énergie électrique par des dispositifs autonomes de production d'électricité, privés.

## ARRIERE-PLAN TECHNOLOGIQUE DE L'INVENTION

Dans le domaine de la distribution d'électricité, il est connu que le réseau de distribution général d'électricité - appelé plus simplement réseau de distribution général - fournisse en électricité chaque logement, industrie, local commercial, et toute autre entité consommatrice d'électricité, et facture chacune de ces entités en fonction de sa consommation propre, à savoir le nombre de kWh (kilowattheure) consommé. Depuis plusieurs années, des dispositifs autonomes de production d'électricité, qui produisent une énergie renouvelable, sont apparus. Ces dispositifs autonomes de production d'électricité, comme par exemple les dispositifs photovoltaïques, éoliens ou hydrauliques, sont installés sur des bâtiments ou des terrains privés pour alimenter, à moindre frais, lesdits bâtiments en électricité. Les installations comportant un dispositif autonome de production d'électricité permettent une autoconsommation, c'est-à-dire la consommation en local de l'électricité produite localement.

Cependant, ces dispositifs autonomes de production d'électricité ne produisent pas une quantité d'énergie répartie régulièrement sur une journée. Par exemple, des panneaux photovoltaïques ne produisent de l'énergie électrique que dans la journée, après le lever du soleil. Ainsi, un bâtiment sur lequel sont installés des panneaux photovoltaïques sera alimenté en énergie électrique uniquement entre le lever et le coucher du soleil. La nuit, la quantité d'énergie électrique produite étant nulle ou très faible, le bâtiment est alimenté en électricité par le réseau de distribution général d'électricité. A contrario, durant la journée, il est fréquent que la quantité d'énergie électrique produite par ces panneaux photovoltaïques soit supérieure à la quantité d'énergie électrique consommée par le bâtiment. L'énergie électrique excédentaire, c'est-à-dire l'énergie électrique produite par le dispositif autonome de production d'électricité et non consommée par le bâtiment, est généralement revendue à faible coût au réseau de distribution général, le coût du kWh acheté par le réseau de distribution général étant généralement plus faible que le coût du kWh vendu par ledit réseau de distribution général. Une autre possibilité est de stocker l'énergie électrique non consommée, dans un dispositif de stockage approprié comme, par exemple, une batterie solaire dans le cas d'une énergie électrique produite par des panneaux solaires. Cependant, non seulement cette disposition de stockage de l'énergie électrique n'est pas autorisée dans tous les pays, mais en plus elle a un coût non négligeable.

La rentabilité d'un dispositif autonome de production d'électricité est donc généralement améliorée par la capacité à maximiser l'autoconsommation de l'électricité produite, et donc le taux d'autoconsommation dudit dispositif. Ce taux d'autoconsommation est défini comme le pourcentage de la production d'énergie électrique consommée sur place. Plus précisément, le taux d'autoconsommation, noté Taux Autoconso, est défini par la formule :

$$Taux\ Autoconso = \frac{ENR\ autoconsommé}{ENR\ produite} * 100$$

, où ENR autoconsommé est la quantité d'énergie électrique consommée sur place et ENR produite est la quantité d'énergie électrique produite par le dispositif autonome de production d'électricité.

Dans la plupart des installations, le taux d'autoconsommation est proche de 20% à 30%. Pour augmenter ce taux d'autoconsommation, et ainsi améliorer la rentabilité des dispositifs autonomes de production d'électricité, les installations privées produisant et consommant de l'électricité - appelées ici entités productrices d'électricité (ou prosumers, en termes anglosaxons) - peuvent être reliées à des entités uniquement consommatrices (ou consumers, en termes anglo-saxons) afin que l'énergie électrique produite par les entités productrices soit consommée non seulement par les entités productrices mais aussi par les entités consommatrices. Le modèle selon lequel des entités productrices sont regroupées avec des entités consommatrices afin de répartir la production électrique est appelé modèle d'autoconsommation collective ou d'autoconsommation virtuelle. Ce modèle d'autoconsommation collective permet à des particuliers, des collectivités, des entreprises, des copropriétés, etc., proches géographiquement les uns des autres (c'est-à-dire dont les points de soutirage et d'injection au réseau de distribution général sont situés en aval d'un même poste de transformation d'électricité de moyenne en basse tension) de se regrouper au sein d'une personne morale pour partager la production d'électricité.

Cependant, si un modèle d'autoconsommation collective a l'avantage d'augmenter le taux d'autoconsommation, il a aussi l'inconvénient de nécessiter une gestion appropriée de la répartition du flux d'énergie électrique produit par les entités productrices. Il nécessite également une gestion appropriée du flux d'énergie électrique acheté au réseau de distribution général, lorsque le flux d'énergie électrique produite est insuffisant. Autrement dit, le flux d'énergie électrique produit doit être partagé de façon équitable entre toutes les entités du modèle d'autoconsommation collective afin que ce modèle soit intéressant financièrement pour toutes les entités.

Le document de Plaza Caroline, Julien Gil, Francois de Chezelles, et Karl Axel Strang intitulé « Distributed Solar Self-Consumption and Blockchain Solar Energy Exchanges on the Public Grid Within an Energy Community » et publié en 2018 dans IEEE International Conference on Environment and Electrical Engineering et IEEE Industrial and Commercial Power Systems Europe (EEEIC / I&CPS Europe), propose une solution de partage de l'énergie électrique produite. Cette solution consiste en une méthode de comptage permettant de comptabiliser la quantité d'énergie en utilisant la technologie dite de « blockchain » pour le cryptage au sein de la communauté d'entités. Cependant, la méthode proposée dans ce document permet uniquement de gérer les échanges d'énergie électrique en fonction de règles préétablies par la communauté. Elle ne permet pas une gestion équitable du flux d'énergie en fonction des besoins de chaque entité et de la quantité d'énergie électrique produite.

Le document de Verschae Rodrigo, Takekazu Kato, Hiroaki Kawashima et Takashi Matsuyama, intitulé « A Cooperative Distributed Protocol for Coordinated Energy Management in Prosumer Communities » et publié en décembre 2015 dans Technical Report of IEICE, propose une méthode de négociation entre entités productrices. Cependant, cette méthode comporte deux niveaux assez complexes à mettre en œuvre et nécessite une grande ressource de calcul. En outre, cette méthode ne prend pas en compte la contribution exacte de chaque entité et notamment les consommations des entités consommatrices et les productions des entités productrices.

Le document Solène Goy ET AL: "Load Management in Buildings", Urban Energy Systems for Low-Carbon Cities (excerpt), 30 novembre 2018 (2018-11-30), pages 1/14-6/14, XP055723126, ISBN: 978-0-12-811553-4, divulgue un outil pour maximiser l'auto consommation dans une communauté de bâtiments dans laquelle les occupants sont prêts à modifier leurs pratiques d'utilisation de L'énergie pour améliorer les performances énergétiques. Cet outil propose trois niveaux : un niveau local, un niveau « voisinage » et un niveau global.

Il existe donc un réel besoin d'une technologie permettant de gérer de façon équitable le flux d'énergie électrique produit, entre les entités productrices et les entités consommatrices, en tenant compte de la contribution de chacune des entités.

## RESUME DE L'INVENTION

Pour répondre aux problèmes évoqués ci-dessus de la non-prise en compte des besoins des différentes entités, du manque d'équité dans la répartition de l'énergie électrique produite et du besoin d'une solution simple d'un point de vue calculatoire, le demandeur propose un procédé de gestion du flux d'énergie électrique en fonction des besoins prévisionnels et des besoins réels de chaque entité, qu'elle soit productrice ou consommatrice d'électricité.

Selon un premier aspect, l'invention concerne un procédé de gestion automatique d'un flux d'énergie électrique produit par au moins un premier groupe d'entités productrices et consommé par ledit premier groupe d'entités productrices et au moins un deuxième groupe d'entités consommatrices, dans lequel chaque entité de chaque groupe détermine, au début d'une période prédéterminée, une prévision de production et/ou une prévision de consommation d'énergie électrique pour la période prédéterminée, le procédé comportant les opérations suivantes :

- a) déterminer, pour chaque groupe, un ordre de consultation des entités du groupe,
- b) consulter les entités productrices suivant l'ordre déterminé à l'étape a), chaque entité productrice calculant une prévision de production résiduelle tenant compte de ses propres prévisions de production, d'une prévision de production résiduelle transmise par une entité précédente et d'une part d'une prévision de consommation pouvant être alimentée par la prévision de production résiduelle, et transmettant cette prévision de production résiduelle à l'entité productrice suivante selon l'ordre déterminé,
- c) réitérer l'étape b) tant que toutes les entités productrices n'ont pas été consultées,
- d) lorsque les prévisions de production résiduelles sont excédentaires, transmettre lesdites prévisions de production résiduelles au groupe d'entités consommatrices,
- e) consulter les entités consommatrices suivant l'ordre déterminé à l'étape a), chaque entité consommatrice calculant et transmettant, à l'entité consommatrice suivante selon l'ordre déterminé, la prévision de production résiduelle en tenant compte de la prévision de production résiduelle transmise par l'entité précédente et de sa part de prévision de consommation pouvant être alimentée,
- f) réitérer l'étape e) tant que toutes les entités consommatrices n'ont pas été consultées,
- g) réitérer les étapes b) à f) tant qu'un critère de convergence prédéterminé n'a pas été atteint.

Ce procédé permet d'améliorer le taux d'autoconsommation de l'ensemble des entités connectées en réseau et de répartir, moyennant un changement régulier des ordres de consultation, l'énergie électrique produite entre les différentes entités équitablement, en tenant compte de la contribution de chacune des entités.

Dans la suite de la description, on appellera indifféremment « énergie électrique » ou « électricité », une quantité d'électricité produite ou consommée, comptabilisée en kWh (kilowattheure).

De façon avantageuse, l'étape b) comporte les opérations suivantes :

- calculer une prévision de production cumulée correspondant à ses prévisions de production additionnées à une éventuelle prévision de production résiduelle transmise par une entité précédente,
- identifier une part de sa prévision de consommation pouvant être alimentée par cette prévision de production cumulée,
- calculer une prévision de production résiduelle correspondant à la prévision de production cumulée moins la part de sa prévision de consommation pouvant être alimentée,
- calculer une prévision de consommation résiduelle correspondant à sa prévision de consommation moins la part de sa prévision de consommation pouvant être alimentée, ajoutée à une éventuelle prévision de consommation résiduelle transmise par une entité précédente, et
- transmettre à l'entité productrice suivante selon l'ordre déterminé, les prévisions de production et les prévisions de consommation résiduelles calculées ;

et l'étape e) comporte les opérations suivantes :

- identifier une part de sa prévision de consommation pouvant être alimentée par la prévision de production résiduelle transmise par l'entité précédente,
- calculer la prévision de production résiduelle correspondant à la prévision de production résiduelle transmise par l'entité précédente moins la part de sa prévision de consommation pouvant être alimentée,
- calculer la prévision de consommation résiduelle correspondant à sa prévision de consommation moins la part de sa prévision de consommation pouvant être alimentée, ajoutée à une éventuelle prévision de consommation résiduelle transmise par une entité précédente, et
- transmettre à l'entité consommatrice suivante selon l'ordre déterminé, les prévisions de production et les prévisions de consommation résiduelles calculées.

Le premier et le deuxième groupes d'entités étant reliés à un réseau de distribution général d'électricité, le procédé comporte, avantageusement, à la fin d'au moins une période prédéterminée, l'établissement d'un bilan énergétique basé sur une comparaison, pour chaque entité de chaque groupe, entre les prévisions de production et la production réelle et/ou entre les prévisions de consommation et la consommation réelle de l'entité.

De façon avantageuse, l'établissement du bilan énergétique comporte les opérations suivantes :

- l) consulter chaque entité productrice suivant l'ordre de consultation déterminé à l'étape a) chaque entité productrice :

  - calculant la production réelle cumulée correspondant à sa production réelle additionnée à l'éventuelle production résiduelle réelle transmise par l'entité précédente,
  - identifiant une part de sa consommation réelle pouvant être alimentée par cette production réelle cumulée,
  - calculant la production résiduelle réelle correspondant à la production réelle cumulée moins la part maximale de sa consommation réelle pouvant être alimentée,
  - calculant la consommation réelle résiduelle correspondant à sa consommation réelle moins la part de sa consommation réelle pouvant être alimentée, ajouté à une éventuelle consommation réelle résiduelle transmise par l'entité précédente,
  - transmettant ladite production résiduelle réelle et ladite consommation résiduelle réelle à l'entité productrice suivante selon l'ordre de consultation,

- m) réitérer l'étape b) tant que toutes les entités productrices n'ont pas été consultées,
- n) consulter les entités consommatrices suivant l'ordre de consultation déterminé à l'étape a), chaque entité consommatrice déterminant la consommation résiduelle réelle de ladite entité consommatrice et la production résiduelle réelle, et transmettant ladite consommation résiduelle réelle et la production résiduelle réelle à l'entité consommatrice suivante selon l'ordre de consultation,
- o) réitérer l'étape n) tant que toutes les entités consommatrices n'ont pas été consultées, et
- p) établir le bilan énergétique indiquant, pour chacune des entités productrices et consommatrices, la quantité d'énergie électrique consommée fournie par les entités productrices et la quantité d'énergie électrique consommée fournie par le réseau de distribution d'électricité.

Outre les caractéristiques qui viennent d'être évoquées dans le paragraphe précédent, le procédé de gestion selon un aspect de l'invention peut présenter une ou plusieurs caractéristiques complémentaires parmi les suivantes, considérées individuellement ou selon toutes les combinaisons techniquement possibles :

- l'ordre de consultation des entités déterminé à l'étape a) est modifié à chaque début de période prédéterminée.
- l'ordre de consultation est choisi aléatoirement.
- les prévisions de consommation sont optimisées par chacune des entités productrices et consommatrices en fonction des prévisions de production et/ou des prévisions résiduelles de production transmises par l'entité précédente.

- les prévisions de consommation sont optimisées par chacune des entités productrices et consommatrices en choisissant, dans le temps, le moment de consommation le plus approprié en fonction des prévisions de production et/ou des prévisions résiduelles de production transmises par l'entité précédente.
- lorsque les prévisions de production résiduelle sont supérieures aux prévisions de consommation résiduelle des groupes d'entités productrices et consommatrices, l'énergie électrique réellement produite est stockée dans un dispositif de stockage pour être consommée ultérieurement.
- plusieurs regroupements auto-consommateurs, comportant chacun au moins un premier groupe d'entités productrices et au moins un deuxième groupe d'entités consommatrices, sont reliés pour partager le flux d'énergie électrique produit par les premiers groupes d'entités productrices en appliquant, regroupement auto-consommateur par regroupement auto-consommateur, les étapes a) à g) et l) à p) lorsque les prévisions de production résiduelles d'un des regroupements auto-consommateur sont supérieures aux prévisions de consommation dudit regroupement auto-consommateur.
- le procédé comporte une opération d'établissement d'un bilan global indiquant, pour chacun des regroupements auto-consommateurs, la quantité d'énergie électrique consommée fournie par les regroupements auto-consommateurs et la quantité d'énergie électrique consommée fournie par le réseau de distribution d'électricité.
- les regroupements auto-consommateurs sont consultés selon un ordre de consultation modifié au début de chaque période prédéfinie.
- lorsqu'un premier regroupement auto-consommateur et un deuxième regroupement auto-consommateur comportent une même entité productrice ou consommatrice, ladite entité est consultée avant le deuxième regroupement auto-consommateur.

Selon un deuxième aspect, l'invention concerne une unité de traitement d'un flux d'énergie électrique produit par au moins un premier groupe d'entités productrices et consommé par ledit premier groupe d'entités productrices et au moins un deuxième groupe d'entités consommatrices, caractérisé en ce qu'elle assure au moins la détermination de l'ordre de consultation des entités, la gestion de la consultation desdites entités et la vérification du critère de convergence prédéterminé.

Selon un troisième aspect, l'invention concerne un réseau d'entités auto-consommatrices d'électricité, caractérisé en ce qu'il comporte :

- une pluralité d'entités productrices et d'entités consommatrices connectées localement les unes aux autres, et
- au moins une unité de traitement d'un flux d'énergie électrique telle que définie ci-dessus et connectée à chacune des entités consommatrices et productrices.

Avantageusement, le réseau d'entités auto-consommatrices est relié au réseau de distribution général d'électricité.

Selon un quatrième aspect, l'invention concerne un programme d'ordinateur, caractérisé en ce qu'il comprend des instructions qui, lorsqu'elles sont exécutées par une unité de traitement d'un flux d'énergie électrique, sont propres à mettre en œuvre le procédé tel que défini ci-dessus pour gérer automatiquement le flux d'énergie électrique produit par au moins un premier groupe d'entités productrices et consommé par ledit premier groupe d'entités productrices et au moins un deuxième groupe d'entités consommatrices.

**BREVE DESCRIPTION DES FIGURES**

D'autres avantages et caractéristiques de l'invention apparaîtront à la lecture de la description qui suit, illustrée par les figures dans lesquelles :

La figure 1 représente schématiquement un exemple de réseau d'entités auto-consommatrices selon l'invention ;

La figure 2 représente schématiquement un exemple de plusieurs entités connectées en un réseau d'entités auto-consommatrices selon l'invention ;

La figure 3 représente schématiquement un exemple de deux réseaux d'entités auto-consommatrices connectés l'un à l'autre ;

La figure 4 représente schématiquement un exemple de transmission des valeurs prévisionnelles de production et de consommation d'électricité entre deux réseaux d'entités auto-consommatrices ;

La figure 5 représente un exemple d'organigramme de détermination de la répartition prévisionnelle du flux d'énergie électrique au sein d'un réseau d'entités auto-consommatrices ;

La figure 6 représente un exemple d'organigramme d'établissement du bilan énergétique au sein d'un réseau d'entités auto-consommatrices ;

La figure 7 représente, sous la forme d'un graphique en aires empilées, un exemple chronologique de prévisions de production et de prévisions de consommation non-optimisées et optimisées ;

La figure 8 représente, sous la forme d'un tableau, une comparaison de résultats de consommation électrique obtenus avec un procédé selon l'art antérieur et le procédé selon l'invention.

## DESCRIPTION DETAILLEE

Un exemple de réalisation d'un procédé de gestion automatique d'un flux d'énergie électrique produite par un dispositif autonome de production d'électricité permettant une répartition équitable de l'électricité produite est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

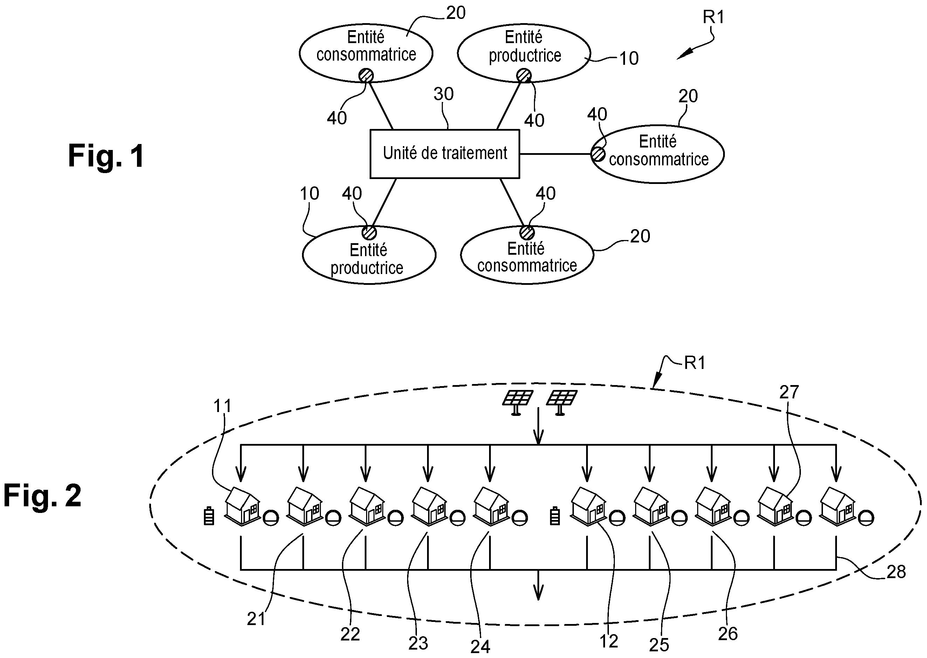

Le procédé de gestion automatique d'un flux d'énergie électrique selon l'invention a pour but de gérer de façon équitable et au travers d'un calcul facilité la quantité d'électricité produite par une ou plusieurs entités productrices d'électricité et consommée par lesdites entités productrices ainsi que par des entités consommatrices d'électricité, les entités productrices et les entités consommatrices étant reliées les unes aux autres pour former un réseau d'entités auto-consommatrices - appelé aussi regroupement auto-consommateur - dont un exemple est représenté sur la figure 1.

On appelle « entité productrice », tout bâtiment (tel que : logement, local commercial, industrie, terrain privé, etc.) équipé d'un ou de plusieurs dispositifs autonomes de production d'électricité permettant audit bâtiment une production locale d'électricité pouvant permettre d'alimenter une partie de sa consommation (notion d'autoconsommation de l'électricité en local au bâtiment). On appelle « entité consommatrice » tout bâtiment (tel que : logement, local commercial, industrie, etc.) équipé de dispositifs consommateurs d'électricité (tel que : lave-linge, téléviseur, ordinateur, radiateur, etc.).

Comme représenté sur la figure 1, le réseau d'entités auto-consommatrices R1 comporte plusieurs entités productrices 10 et plusieurs entités consommatrices 20, toutes connectées à une unité de traitement 30 assurant la mise en œuvre, au sein du réseau d'entités auto-consommatrices, du procédé qui va être décrit par la suite. Chaque entité productrice 10 et chaque entité consommatrice 20 comporte une interface de connexion 40 permettant un échange de données, par liaison filaire ou liaison sans fil, entre l'unité de traitement 30 et ladite entité. L'unité de traitement 30 peut être un ordinateur, un box ou tout autre calculateur, localisé dans l'une des entités ou dans un local indépendant et mettant en œuvre un programme d'ordinateur apte à exécuter des instructions correspondant aux opérations qui seront décrites par la suite. En variante, l'unité de traitement 30 peut également être « virtuelle » et stockée sous la forme d'un programme d'ordinateur sur une infrastructure délocalisée, c'est-à-dire située à distance (de plusieurs kilomètres) des entités auto-consommatrices, et communicant avec les interfaces de connexion desdites entités par l'intermédiaire d'un réseau de télécommunication tel que le réseau Internet.

Un exemple de réseau d'entités auto-consommatrices est représenté sur la figure 2. Ce réseau d'entités auto-consommatrices R1 comporte dix entités connectées les unes aux autres, par exemple dix maisons d'un même quartier, avec huit entités consommatrices 21-28 et deux entités productrices 11 et 12, produisant de l'énergie électrique au moyen de panneaux photovoltaïques.

Selon certains modes de réalisation, le réseau d'entités auto-consommatrices est connecté à un réseau de distribution général d'électricité (non représenté sur la figure) permettant de compléter l'apport en électricité, lorsque les entités productrices du réseau d'entités auto-consommatrices ne fournissent pas suffisamment d'électricité pour assurer les besoins en électricité de la totalité dudit réseau d'entités auto-consommatrices.

L'unité de traitement 30 met en œuvre un procédé destiné à établir, pour une période prédéterminée, les prévisions de production par l'ensemble des entités productrices 10 - appelé aussi premier groupe d'entités - et les prévisions de consommation par les entités consommatrices 20 - appelées aussi deuxième groupe d'entités - ainsi que par les entités productrices. Cette période prédéterminée est d'une durée suffisamment courte pour permettre à chaque entité productrice ou consommatrice d'évaluer ses prévisions de consommation et suffisamment longue pour permettre à chaque entité productrice d'évaluer ses prévisions de production d'électricité. Cette période prédéterminée peut être, par exemple, une période de quelques heures, d'une journée ou de quelques jours.

Les prévisions de production et les prévisions de consommation d'électricité pour un réseau d'entités auto-consommatrices sont réalisées de façon itérative jusqu'à ce qu'un critère de convergence soit atteint. Les itérations successives sont réalisées tout d'abord pour les entités productrices afin de déterminer la quantité globale d'énergie électrique produite prévisionnellement par le réseau d'entités auto-consommatrices, pendant la période prédéterminée. Les itérations successives sont réalisées ensuite pour les entités consommatrices afin de déterminer la quantité d'énergie électrique prévisionnellement nécessaire pour alimenter le réseau d'entités auto-consommatrices pendant la période prédéterminée.

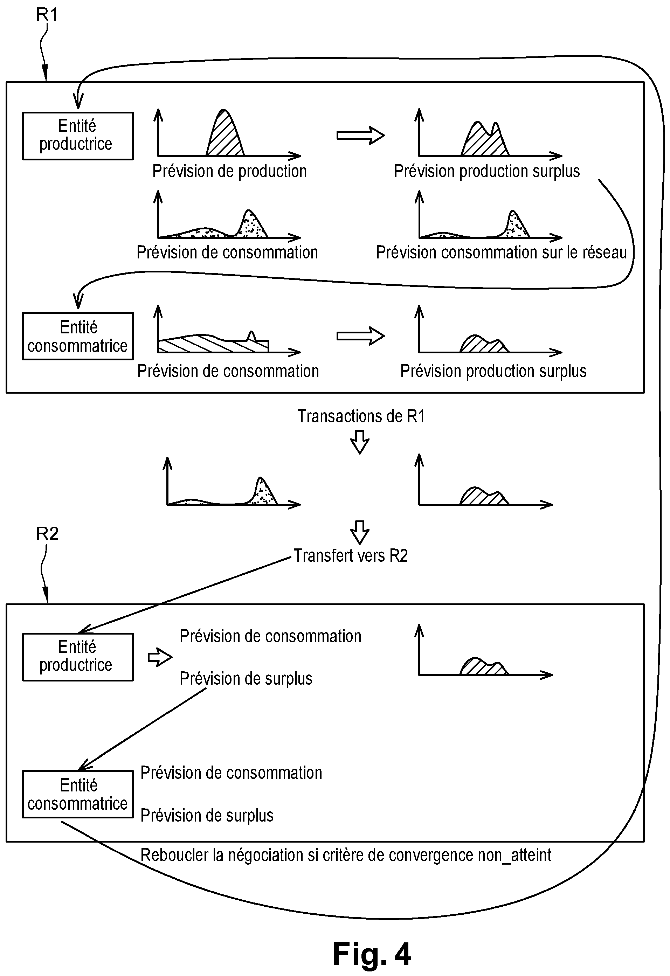

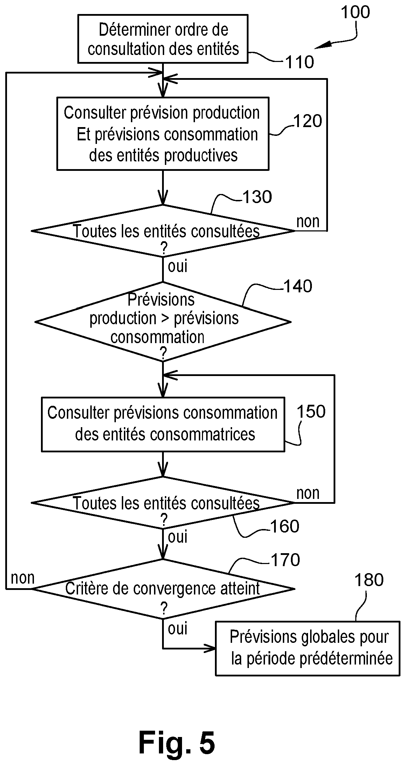

De façon plus précise, et comme représenté sur les figures 4 et 5, le procédé 100 pour établir les prévisions de production et de consommation comporte une première étape 110 consistant à choisir un ordre d'itération des entités. Cet ordre d'itération, appelé aussi ordre de consultation, est l'ordre dans lequel les entités sont consultées pour fournir leurs prévisions et l'ordre dans lequel sont agrégées les productions et consommations résiduelles. Il est modifié à chaque nouvelle période prédéterminée pour assurer l'équité dans le réseau d'entités auto-consommatrices. Cet ordre d'itération peut être, par exemple, aléatoire ; les entités productrices, et respectivement les entités consommatrices, sont alors consultées de façon arbitraire les unes à la suite des autres. En variante, l'ordre d'itération peut être un ordre prédéterminé ou une rotation prédéfinie, alterné à chaque nouvelle période. Quel que soit le choix de l'ordre d'itération, cet ordre est modifié à chaque période prédéfinie - par exemple à chaque début de journée si la période prédéfinie est d'une journée - ou à chaque ensemble de plusieurs périodes prédéfinies, -par exemple tous les deux ou trois jours - afin que la hiérarchie suivant laquelle les entités sont consultées soit régulièrement (et souvent) modifiée.

Le procédé 100 est répété à chaque début de période prédéterminée, par exemple à chaque début de journée. Le procédé 100 comporte, après le choix 110 de l'ordre d'itération, une étape 120 de consultation des entités productrices qui fournissent, chacune à leur tour, leurs prévisions de production résiduelles et leurs prévisions de consommation résiduelles pour la période. Les prévisions de production résiduelles correspondent aux prévisions de production de l'entité, agrégées avec la prévision de production résiduelle transmise par l'entité précédente quand elle est présente, et dont sont soustraites les consommations de l'entité qui peuvent être alimentées par la production propre de ladite entité ainsi que par le résiduel de production non-utilisée des entités précédentes dans la chaîne de consultation. La prévision de consommation résiduelle correspond quant à elle à la prévision de consommation, une fois retranchée la production qui peut y être allouée, agrégée avec la prévision résiduelle de consommation transmise par l'entité précédente quand elle est présente. La prévision de consommation de l'entité qui peut être alimentée par sa production propre et le résiduel de production non-utilisée des entités précédentes dans la chaîne de consultation est appelée « part de la prévision de consommation pouvant être alimentée ». Dans la suite de la description, il est entendu que pour chaque entité, ce calcul des productions et consommation résiduelles sera effectué avant toute diffusion des caractéristiques de production résiduelle et de consommation résiduelles aux entités suivantes dans le processus de consultation. A la fin de chaque consultation, l'entité productrice 10 transmet ses prévisions de production résiduelle et de consommation résiduelle à l'entité productrice suivante selon l'ordre d'itération choisi. Ces prévisions de production et de consommation résiduelles peuvent être transmises directement d'une entité à une autre entité ; elles peuvent, alternativement, être transmises d'une entité à une autre par l'intermédiaire de l'unité de traitement, chaque entité échangeant alors uniquement avec l'unité de traitement 30 (exemple de la figure 1). Quel que soit le mode de transmission, les prévisions de production résiduelle et les prévisions de consommation résiduelle sont transmises de façon itérative d'une entité productrice à l'entité productrice suivante. Chaque entité productrice ajoute les prévisions de production et de consommation résiduelles reçues à ses propres prévisions de production et de consommation, et effectue un nouveau calcul de prévision de production résiduelle et de prévision de consommation résiduelle en cherchant en interne à utiliser la production disponible (i.e. production locale et production résiduelle transmise par l'entité précédente) pour répondre au maximum à sa consommation locale. Cette disponibilité de production au niveau d'une entité donnée, cumulant la production de l'entité avec le résiduel de production transmis par l'entité précédente, est nommée production cumulée. Ainsi, les prévisions de production et les prévisions de consommation sont agrégées au fur et à mesure des consultations des entités productrices tout en étant valorisées quand cela est possible en interne aux entités et, après consultation de toutes les entités productrices, il est possible d'évaluer s'il reste une production résiduelle positive ou si toute la production a été autoconsommée.

L'étape 120 qui vient d'être décrite est réitérée tant que toutes les entités productrices 10 n'ont pas été consultées (opération 130). Lorsque toutes les entités productrices ont été consultées, le procédé propose de vérifier si les prévisions de de production sont excédentaires. Autrement dit, le procédé propose de vérifier si les prévisions de production résiduelles sont positives ou nulles, c'est-à-dire s'il existe une prévision de production résiduelle non-consommée (opération 140). Si la prévision de production résiduelle est nulle (c'est-à-dire que la prévision de production a été intégralement consommée par les entités successives), alors les prévisions globales (c'est-à-dire l'ensemble des prévisions de consommation et des prévisions de production) sont considérées déterminées pour la période prédéterminée (étape 180). Par contre, si les prévisions excédentaires sont positives, c'est dire s'il reste une prévision de production résiduelle non-nulle, la prévision de production résiduelle de l'étape 120 et la prévision de consommation résiduelle de l'étape 120 sont transmises à la première entité consommatrice (c'est-à-dire la première entité consommatrice suivant l'ordre déterminé à l'étape 110). Les entités consommatrices sont alors consultées (étape 150) de façon itérative, les unes à la suite des autres en suivant l'ordre établi à l'étape 110. Durant cette étape 150, et suivant le même principe que lors de l'étape 120, chaque entité consommatrice calcule ses prévisions de consommation résiduelle pour la période prédéterminée et les prévisions de production résiduelles, sur la base des prévisions de production et de consommation résiduelles reçues ainsi que de sa propre consommation. L'étape 150 est réitérée tant que toutes les entités consommatrices n'ont pas été consultées (test 160).

Les étapes 120 à 160 sont réitérées une pluralité de fois afin d'optimiser les prévisions de consommation par rapport aux prévisions de production. A l'issue de l'étape 160, les productions et consommations résiduelles sont fournies en entrée de la première entité productrice de l'étape 120 lors d'une itération. On considère que les prévisions obtenues sont optimales lorsque le taux d'autoconsommation atteint 100%, c'est-à-dire lorsque le surplus de prévision de production est nul. En effet, le procédé selon l'invention a pour objectif d'obtenir un surplus de production nul. Le procédé cherche donc, dans un premier temps, à obtenir une prévision de production excédentaire égale à zéro. Le fait de consulter de façon itérative les différentes entités permet de s'approcher peu à peu de cet objectif. Cependant, il n'est pas toujours possible d'obtenir une prévision de production excédentaire qui soit nulle. Dans ce cas, on considère que si un critère de convergence prédéfini est atteint, alors les prévisions obtenues sont optimales. Pour cela, dans l'exemple du procédé représenté sur la figure 5, le test 170 propose de vérifier que le critère de convergence est atteint. Autrement dit, lorsque toutes les entités productrices et consommatrices ont été consultées, le procédé comporte une étape 170 consistant à vérifier si le critère de convergence est atteint. Ce critère de convergence peut être, par exemple, une valeur du surplus de production, une vitesse de convergence, un taux minimal d'amélioration par rapport à l'itération précédente, un temps maximum d'itération des étapes 120 à 160, etc. Pour certains critères, la convergence peut être considérée atteinte lorsque le résultat de prévisions de production et/ou consommation net pour une entité n'est que marginalement différente du résultat de prévisions de production et/ou consommation net de l'itération de calcul précédente.

Dans le procédé 100, tant que le critère de convergence n'est pas atteint, les étapes 120 à 160 sont réitérées. Lorsque le critère de convergence est atteint, on considère que les prévisions globales (c'est-à-dire l'ensemble des prévisions de consommation et des prévisions de production) sont déterminées (étape 180).

Les étapes 120 à 180 décrites précédemment sont mises œuvre, en début de période prédéterminée, par exemple en début de journée, pour déterminer les prévisions optimales de consommation de l'énergie électrique produite pendant la période prédéterminée. A la fin de cette période prédéterminée, ou de plusieurs périodes prédéterminées cumulées, un bilan énergétique est établi de façon itérative afin de déterminer la répartition réelle du flux d'énergie pour la ou les période(s) prédéterminée(s). Ce bilan énergétique est établi en comparant, pour chaque entité, les prévisions de production avec la production réelle et les prévisions de consommation avec la consommation réelle. Plus précisément, le bilan énergétique est établi en consultant de façon itérative chacune des entités productrices suivant l'ordre établi à l'étape a) en prenant en compte, d'une part la production réelle, et d'autre part la consommation réelle et en effectuant le bilan des productions réelles résiduelles et consommations réelles résiduelles de l'ensemble des entités productrices suivant l'ordre établi à l'étape a) et en suivant les mêmes principes de calcul que lors de l'étape de calcul prévisionnel puis en continuant de façon similaire le bilan des production et consommations réelles résiduelles sur l'ensemble des entités consommatrices, toujours suivants les mêmes principes de calcul que lors de l'étape de calcul prévisionnel. Dans le cas des entités consommatrices, seule la consommation réelle est prise ne compte, mais qui influe à la fois sur la production réelle résiduelle, qui est propagée entité après entité en étant potentiellement consommée au fur et à mesure, et sur la consommation réelle résiduelle qui tend à s'agréger d'entité en entité.

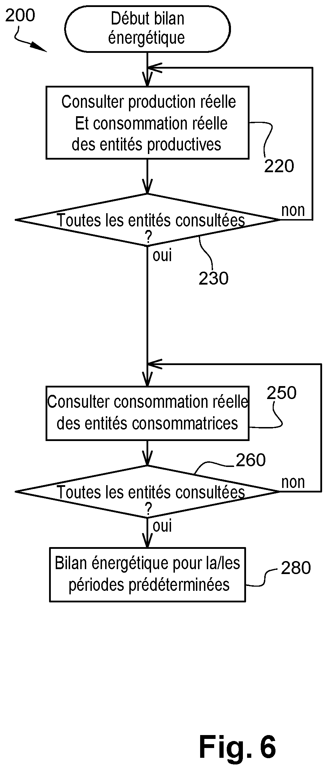

Le procédé 200 d'établissement du bilan énergétique, dont un exemple d'organigramme est représenté sur la figure 6, est mis en œuvre, à chaque fin de période prédéterminée ou après plusieurs périodes prédéterminées - par exemple à la fin de chaque journée ou d'une semaine lorsque la période prédéterminée est une journée. Le procédé 200 comporte une étape 220 de consultation des entités productrices qui fournissent, chacune à leur tour, la production réelle résiduelle produite par l'entité productrice pendant la ou l'ensemble de périodes prédéterminées et la consommation réelle résiduelle consommée pour cette même période ou ensemble de périodes. A la fin de chaque consultation, l'entité productrice transmet ses valeurs de production et de consommation résiduelles à l'entité productrice suivante selon l'ordre d'itération choisi. Les valeurs de production et de consommation résiduelles peuvent être transmises directement d'une entité à une autre entité ; elles peuvent, alternativement, être transmises d'une entité à une autre par l'intermédiaire de l'unité de traitement, chaque entité échangeant alors uniquement avec l'unité de traitement (exemple de la figure 1). Quel que soit le mode de transmission, les valeurs de production et les valeurs de consommation résiduelles sont transmises de façon itérative d'une entité productrice à l'entité productrice suivante, chaque entité productrice ajoutant les valeurs de production résiduelles reçues à ses propres valeurs de production, et met en regard sa propre consommation réelle pour identifier le potentiel d'autoconsommation local, et calculer les nouvelles valeurs de production et consommation réelles résiduelles à transmettre qui intègrent cette autoconsommation, de sorte que les valeurs de production et de consommation résiduelles réelles sont agrégées au fur et à mesure des consultations des entités productrices, en intégrant leurs autoconsommations locales.

L'étape 220 qui vient d'être décrite est réitérée tant que toutes les entités productrices n'ont pas été consultées (test 230). Lorsque toutes les entités productrices ont été consultées, les valeurs de production résiduelles en résultant à l'étape 220 et les valeurs de consommation résiduelles en résultant à l'étape 220 sont transmises à la première entité consommatrice (c'est-à-dire la première entité consommatrice suivant l'ordre déterminé à l'étape 110). Les entités consommatrices sont alors consultées (étape 250) de façon itérative, les unes à la suite des autres en suivant l'ordre établi à l'étape 110.

Durant cette étape 250, chaque entité consommatrice calcule, de façon analogue à l'étape 220, la consommation réelle résiduelle consommée par l'entité consommatrice pendant la ou l'ensemble de périodes prédéterminées et la production réelle résiduelle produite pour cette même période ou ensemble de périodes. A la fin de chaque consultation, l'entité consommatrice transmet les valeurs de production résiduelle et les valeurs de consommation résiduelle à l'entité consommatrice suivante selon l'ordre d'itération choisi. Les valeurs de production et de consommation résiduelles peuvent être transmises directement d'une entité à une autre entité ; elles peuvent, alternativement, être transmises d'une entité à une autre par l'intermédiaire de l'unité de traitement, chaque entité échangeant alors uniquement avec l'unité de traitement (exemple de la figure 1). Quel que soit le mode de transmission, les valeurs de production et les valeurs de consommation résiduelles sont transmises de façon itérative d'une entité consommatrice à l'entité consommatrice suivante, chaque entité consommatrice mettant en regard sa propre consommation réelle avec la production résiduelle réelle transmise par l'entité précédente, pour identifier le potentiel d'autoconsommation local, et calculer les nouvelles valeurs de productions et consommations résiduelles à transmettre, de sorte que les valeurs de production et consommations résiduelles réelles sont agrégées au fur et à mesure des consultations des entités consommatrices, en intégrant leurs autoconsommations locales. L'étape 250 est réitérée tant que toutes les entités consommatrices n'ont pas été consultées (test 260).

Suite à ce bilan, on connait la part d'énergie électrique produite par chaque entité productrice, c'est-à-dire la proportion d'électricité produite par chacune des entités productrices par rapport à la quantité d'électricité totale produite ; on connait également la part d'énergie électrique consommée par chacune des entités productrices/consommatrices, c'est-à-dire la proportion d'électricité consommée par chaque entité productrice/consommatrice par rapport à la quantité totale d'énergie électrique consommée. En tenant compte du prix du kWh, généralement convenu par contrat entre les entités productrices et les entités consommatrices, il est alors possible de facturer, à chaque entité consommatrice ou productrice, la quantité d'énergie électrique consommée par ladite entité consommatrice ou productrice et produite par une ou plusieurs des autres entités productrices.

La méthode itérative de répartition, au sein d'un réseau d'entités auto-consommatrices, de l'énergie électrique produite par les entités productrices dudit réseau d'entités auto-consommatrices permet de répartir au maximum ladite énergie électrique et donc de limiter la quantité d'énergie électrique fournie par le réseau de distribution général d'électricité.

Selon certains modes de réalisation, le procédé 100 de détermination des prévisions comporte une opération consistant, pendant les étapes 120 et 150 de consultation, à optimiser les prévisions de consommations des entités productrices et des entités consommatrices, par exemple en prenant en compte la disponibilité de la production. Cette opération d'optimisation consiste à maximiser la consommation pendant les pics de production de l'énergie électrique. Par exemple, dans un réseau d'entités auto-consommatrices dans lequel l'électricité est produite par des panneaux photovoltaïques, si un pic d'énergie électrique est prévu entre 10h00 et 16h00 (par exemple parce que l'ensoleillement est optimum), les entités consommatrices et/ou les entités productrices peuvent optimiser leur consommation en choisissant de consommer au maximum pendant ce créneau horaire. Une entité consommatrice peut choisir, par exemple, de faire fonctionner le lave-vaisselle et le lave-linge pendant ce créneau horaire au lieu d'un créneau initialement envisagé avant 10h00 ou après 16h00. En effet, si certains dispositifs consommateurs d'électricité fonctionnent en permanence ou à des horaires non modulables, par exemple le chauffage ou l'alarme d'un local, les horaires de fonctionnement de certains dispositifs peuvent, au contraire, être choisis de façon à optimiser la consommation de l'énergie électrique produite.

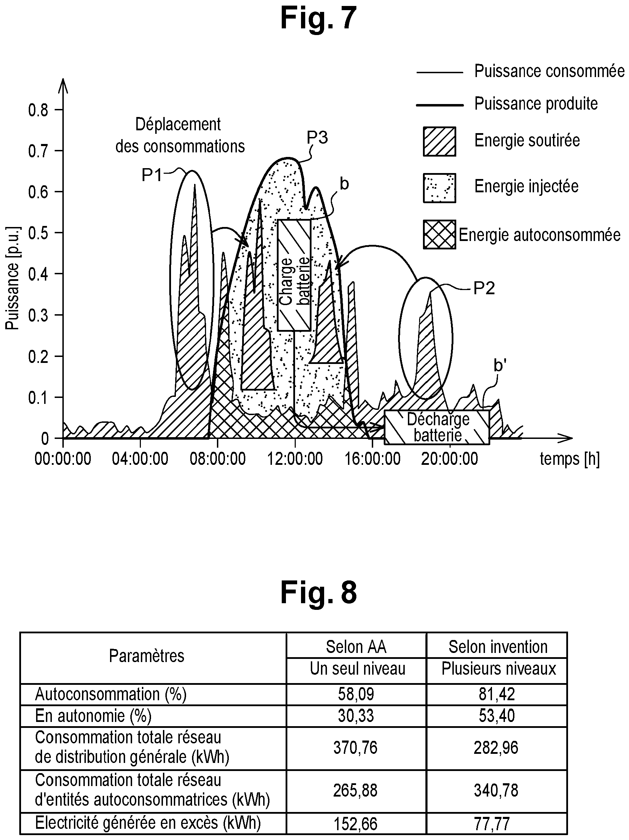

Un exemple d'optimisation de la consommation est représenté sur le diagramme de la figure 7, dans lequel la zone rainurée représente l'énergie électrique nécessaire, au cours d'une journée, la zone mouchetée représente l'énergie électrique générée par le réseau d'entités auto-consommatrices et la zone quadrillée représente l'énergie électrique auto-consommée par les entités productrices. Dans cet exemple, le fonctionnement de certains dispositifs appartenant à des entités consommatrices était initialement prévu vers 6h00 et 20h00. Le fonctionnement de ces dispositifs tel que prévu initialement correspond aux pics de consommation p1 et p2 (zone hachurée). Dans l'exemple, le fonctionnement de ces dispositifs a été décalé dans le temps, respectivement vers 10h00 et 15h00, afin qu'ils consomment de l'électricité durant le pic p3 de production d'énergie par le réseau d'entités auto-consommatrices. Le décalage de la consommation d'énergie électrique pendant une phase de production d'électricité permet d'optimiser la consommation électrique par rapport à la production et, par conséquent, d'améliorer le taux d'autoconsommation.

Dans certains modes de réalisation, il est possible, lorsque la règlementation nationale le permet, de stocker le surplus d'énergie électrique (c'est-à-dire l'énergie électrique produite mais non consommée) dans un dispositif de stockage afin que cette énergie stockée puisse être injectée dans le réseau d'entités auto-consommatrices à des moments où le réseau d'entités auto-consommatrices ne produit pas ou pas suffisamment d'électricité. Le diagramme de la figure 7 montre l'exemple d'une batterie b mise en charge pendant le pic p3 de production d'électricité et dont la décharge (référencée b') est effectuée pendant le pic p2 de consommation. Dans l'exemple de la figure 7, le fait d'injecter de l'énergie électrique dans le réseau d'entités auto-consommatrices permet d'absorber une surconsommation électrique et, par conséquent, de limiter l'injection d'une électricité provenant du réseau de distribution général.

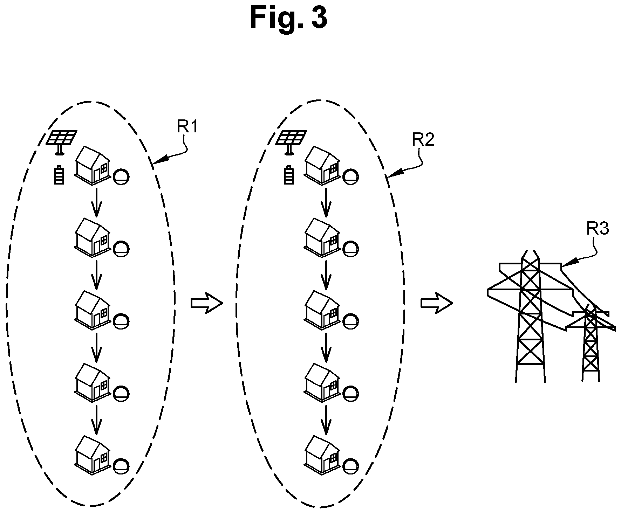

Selon certains modes de réalisation, plusieurs réseaux d'entités auto-consommatrices, appelés aussi regroupements auto-consommateurs ou « pool » en termes anglo-saxons, peuvent s'associer pour améliorer encore l'autoconsommation collective, c'est-à-dire pour optimiser mieux encore la production d'électricité. Un exemple de deux réseaux d'entités auto-consommatrices R1 et R2 est représenté sur la figure 3, dans lequel les réseaux R1 et R2 sont connectés ensemble, et sont connectés également au réseau de distribution général d'électricité R3.

Dans ces modes de réalisation où plusieurs regroupements auto-consommateurs sont reliés ensemble, le procédé 100 de détermination des prévisions est réalisé pour chacun des regroupements les uns à la suite des autres. Lorsque deux regroupements auto-consommateurs (ou réseaux d'entités auto-consommatrices) sont associés, c'est-à-dire connectés l'un à l'autre via le réseau de distribution général, les étapes 120 à 160 du procédé 100 sont mises en œuvre d'abord pour le premier réseau d'entités auto-consommatrices, référencé pool 1, puis, si ce dernier a un surplus de production, par le second réseau d'entités auto-consommatrices, référencé pool 2. Les étapes 120 à 160 sont alors mises en œuvre par ce second réseau d'entités auto-consommatrices de la même façon qu'elles ont été mises en œuvre par le premier réseau d'entités auto-consommatrices, comme expliqué précédemment lors de la description de la figure 5. Les productions et consommations résiduelles d'un pool étant alors transmises au pool suivant. Lorsque le second réseau pool 2 a fini de mettre en œuvre les étapes 120 à 160, le procédé est réitéré, à partir de l'étape 120, par le premier réseau pool 1 si le critère de convergence n'a pas été atteint à la fin de la mise en œuvre par le second réseau pool 2. La figure 4 montre un exemple dans lequel les prévisions de consommation et de production du premier réseau pool 1 sont transmises au second réseau pool 2 qui va, à son tour, ajouter ses propres prévisions à celles du premier réseau pool 1. Les opérations schématisées sur cette figure 4 sont réitérées jusqu'à ce que le critère de convergence soit atteint, par exemple jusqu'à ce que le taux d'autoconsommation atteigne 100%.

De la même manière que pour le procédé 100 de détermination des prévisions, le procédé 200 d'établissement du bilan énergétique peut être mis en œuvre d'abord par le premier réseau pool 1 puis par le second réseau pool 2, lorsque deux regroupements auto-consommateurs sont associés. Les étapes 220 à 260 mises en œuvre pour l'établissement du bilan énergétique dans le cas de plusieurs regroupements auto-consommateurs sont identiques à celles décrites précédemment pour la figure 6 ; elles ne seront donc pas décrites à nouveau.

Lorsque plusieurs regroupements auto-consommateurs sont connectés, et notamment plus de deux regroupements auto-consommateurs, l'ordre de consultation des regroupements est déterminé au début d'une période et modifié à chaque début de période. Le choix de l'ordre de consultation peut être l'un quelconque des ordres de consultation décrit en liaison avec la figure 5.

Dans le cas particulier où une entité appartient à deux regroupements auto-consommateurs, alors cette entité est consultée avant le deuxième regroupement auto-consommateur. Autrement dit, cette entité commune est la première entité qui est consultée dans le deuxième regroupement auto-consommateur. Cette entité commune n'est pas prise en compte dans l'ordre de consultation, par exemple aléatoire ; elle est systématiquement la première entité consultée du deuxième regroupement auto-consommateur.

Dans certains modes de réalisation, la période prédéfinie est divisée en une pluralité d'intervalles de temps, par exemple 15 ou 30 minutes, pour lesquels une moyenne des valeurs de prévisions ou des valeurs réelles est associée à chaque intervalle de temps. Cette division de la période en intervalles de temps permet de faciliter l'optimisation de la consommation et d'établir un bilan énergétique à temps discret, permettant une comptabilité et une facturation plus faciles de l'énergie électrique consommée par chacune des entités.

Ainsi, comme expliqué précédemment, le procédé de gestion du flux d'électricité de l'invention permet une répartition équitable par un procédé de calcul simplifié, au sein d'un ou de plusieurs réseau(x) d'entités auto-consommatrices, de l'énergie produite par ledit réseau ainsi qu'une amélioration du taux d'autoconsommation. Un exemple d'une comparaison de résultats de consommation obtenus, pour un même réseau d'entités auto-consommatrices, dans le cas d'une gestion classique avec une unique itération selon l'art antérieur (nommé AA) et dans le cas d'une gestion selon le procédé de l'invention avec plusieurs itérations est représenté sous la forme d'un tableau sur la figure 8. Cet exemple montre le gain en autoconsommation (de l'ordre de 23%), l'augmentation de la quantité d'électricité auto-consommée (de l'ordre de 75 kWh), la diminution du surplus d'électricité (de l'ordre de 75 kWh) et la diminution de la quantité d'énergie électrique achetée au réseau de distribution général d'électricité (environ 88 kWh). Outre le gain en kWh que permet le procédé de l'invention, il permet en outre, dans certains modes de réalisation, une comptabilité et une facturation plus simples et plus justes de l'électricité consommée, qui prend en compte la contribution réelle de chacune des entités.

Bien que décrit à travers un certain nombre d'exemples, variantes et modes de réalisation, le procédé de gestion du flux d'électricité et le réseau d'entités auto-consommatrices selon l'invention comprennent divers variantes, modifications et perfectionnements qui apparaîtront de façon évidente à l'homme du métier, étant entendu que ces variantes, modifications et perfectionnements font partie de la portée de l'invention.

**Revendications**

1. Procédé de gestion automatique d'un flux d'énergie électrique produit par au moins un premier groupe d'entités productrices (10) et consommé par ledit premier groupe d'entités productrices (10) et au moins un deuxième groupe d'entités consommatrices (20), dans lequel chaque entité de chaque groupe détermine, au début d'une période prédéterminée, une prévision de production et/ou une prévision de consommation d'énergie électrique pour la période prédéterminée, le procédé étant **caractérisé en ce qu'**il comporte les opérations suivantes :

   - a) déterminer, pour chaque groupe, un ordre de consultation des entités du groupe (110),
   - b) consulter les entités productrices (120) suivant l'ordre déterminé à l'étape a), chaque entité productrice calculant une prévision de production résiduelle tenant compte de ses propres prévisions de production, d'une prévision de production résiduelle transmise par une entité précédente et d'une part d'une prévision de consommation pouvant être alimentée par la prévision de production résiduelle, et transmettant cette prévision de production résiduelle à l'entité productrice suivante selon l'ordre déterminé,
   - c) réitérer l'étape b) tant que toutes les entités productrices (10) n'ont pas été consultées (130),
   - d) lorsque les prévisions de production résiduelles sont excédentaires (140), transmettre lesdites prévisions de production résiduelles au groupe d'entités consommatrices (20),
   - e) consulter les entités consommatrices (150) suivant l'ordre déterminé à l'étape a), chaque entité consommatrice calculant et transmettant, à l'entité consommatrice suivante selon l'ordre déterminé, la prévision de production résiduelle en tenant compte de la prévision de production résiduelle transmise par l'entité précédente et de sa part de prévision de consommation pouvant être alimentée,
   - f) réitérer l'étape e) tant que toutes les entités consommatrices n'ont pas été consultées (160),
   - g) réitérer les étapes b) à f) tant qu'un critère de convergence prédéterminé n'a pas été atteint (170).

2. Procédé selon la revendication 1, **caractérisé en ce que** l'étape b) comporte les opérations suivantes :

   - calculer une prévision de production cumulée correspondant à ses prévisions de production additionnées à une éventuelle prévision de production résiduelle transmise par une entité précédente,
   - identifier une part de sa prévision de consommation pouvant être alimentée par cette prévision de production cumulée,
   - calculer une prévision de production résiduelle correspondant à la prévision de production cumulée moins la part de sa prévision de consommation pouvant être alimentée,
   - calculer une prévision de consommation résiduelle correspondant à sa prévision de consommation moins la part de sa prévision de consommation pouvant être alimentée, ajoutée à une éventuelle prévision de consommation résiduelle transmise par une entité précédente, et
   - transmettre à l'entité productrice suivante selon l'ordre déterminé, les prévisions de production et les prévisions de consommation résiduelles calculées ;

   et **en ce que** l'étape e) comporte les opérations suivantes :

   - identifier une part de sa prévision de consommation pouvant être alimentée par la prévision de production résiduelle transmise par l'entité précédente,
   - calculer la prévision de production résiduelle correspondant à la prévision de production résiduelle transmise par l'entité précédente moins la part de sa prévision de consommation pouvant être alimentée,
   - calculer la prévision de consommation résiduelle correspondant à sa prévision de consommation moins la part de sa prévision de consommation pouvant être alimentée, ajoutée à une éventuelle prévision de consommation résiduelle transmise par une entité précédente, et
   - transmettre à l'entité consommatrice suivante selon l'ordre déterminé, les prévisions de production et les prévisions de consommation résiduelles calculées.

3. Procédé selon la revendication 1 ou 2, dans lequel le premier et le deuxième groupes d'entités sont reliés à un réseau de distribution général d'électricité (R3), **caractérisé en ce qu'**il comporte, à la fin d'au moins une période prédéterminée, l'établissement d'un bilan énergétique (200) basé sur une comparaison, pour chaque entité de chaque groupe, entre les prévisions de production et la production réelle et/ou entre les prévisions de consommation et la consommation réelle de l'entité.

4. Procédé selon la revendication 3, **caractérisé en ce**

que l'établissement du bilan énergétique (200) comporte les opérations suivantes :

- l) consulter chaque entité productrice (220) suivant l'ordre de consultation déterminé à l'étape a), chaque entité productrice

  ○ calculant la production réelle cumulée correspondant à sa production réelle additionnée à l'éventuelle production résiduelle réelle transmise par l'entité précédente
  ○ identifiant une part de sa consommation réelle pouvant être alimentée par cette production réelle cumulée
  ○ calculant la production résiduelle réelle correspondant à la production réelle cumulée moins la part de sa consommation réelle pouvant être alimentée
  ○ calculant la consommation réelle résiduelle correspondant à sa consommation réelle moins la part de sa consommation réelle pouvant être alimentée, ajouté à une éventuelle consommation réelle résiduelle transmise par l'entité précédente
  ○ transmettant ladite production résiduelle réelle et ladite consommation résiduelle réelle à l'entité productrice suivante selon l'ordre de consultation,

- m) réitérer l'étape b) tant que toutes les entités productrices n'ont pas été consultées (230),
- n) consulter les entités consommatrices (250) suivant l'ordre de consultation déterminé à l'étape a), chaque entité consommatrice déterminant la consommation résiduelle réelle de ladite entité consommatrice et la production résiduelle réelle, et transmettant ladite consommation résiduelle réelle et la production résiduelle réelle à l'entité consommatrice suivante selon l'ordre de consultation,
- o) réitérer l'étape n) tant que toutes les entités consommatrices n'ont pas été consultées (260), et
- p) établir le bilan énergétique (280) indiquant, pour chacune des entités productrices et consommatrices, la quantité d'énergie électrique consommée fournie par les entités productrices et la quantité d'énergie électrique consommée fournie par le réseau de distribution d'électricité.

5. Procédé selon l'une quelconque des revendications 1 à 4, **caractérisé en ce que** l'ordre de consultation des entités déterminé à l'étape a) est modifié à chaque début de période prédéterminée.

6. Procédé selon la revendication 5, **caractérisé en ce que** l'ordre de consultation est choisi aléatoirement.

7. Procédé selon l'une quelconque des revendications 1 à 6, **caractérisé en ce que** les prévisions de consommation sont optimisées par chacune des entités productrices et consommatrices en fonction des prévisions de production et/ou des prévisions résiduelles de production transmises par l'entité précédente.

8. Procédé selon l'une quelconque des revendications 1 à 7, **caractérisé en ce que** les prévisions de consommation sont optimisées par chacune des entités productrices et consommatrices en choisissant, dans le temps, le moment de consommation le plus approprié en fonction des prévisions de production et/ou des prévisions résiduelles de production transmises par l'entité précédente.

9. Procédé selon l'une quelconque des revendications 1 à 8, **caractérisé en ce que**, lorsque les prévisions de production résiduelle sont supérieures aux prévisions de consommation résiduelle des groupes d'entités productrices et consommatrices, l'énergie électrique réellement produite est stockée dans un dispositif de stockage pour être consommée ultérieurement.

10. Procédé selon l'une quelconque des revendications 3 à 9, **caractérisé en ce que** plusieurs regroupements auto-consommateurs (R1, R2), comportant chacun au moins un premier groupe d'entités productrices (10) et au moins un deuxième groupe d'entités consommatrices (20), sont reliés pour partager le flux d'énergie électrique produit par les premiers groupes d'entités productrices en appliquant, regroupement auto-consommateur par regroupement auto-consommateur, les étapes a) à g) et l) à p) lorsque les prévisions résiduelles de production d'un des regroupements auto-consommateur sont supérieures aux prévisions de consommation dudit regroupement auto-consommateur.

11. Procédé selon la revendication 10, **caractérisé en ce qu'**il comporte une opération d'établissement d'un bilan global indiquant, pour chacun des regroupements auto-consommateurs, la quantité d'énergie électrique consommée fournie par les regroupements auto-consommateurs et la quantité d'énergie électrique consommée fournie par le réseau de distribution d'électricité.

12. Procédé selon la revendication 10 ou 11, **caractérisé en ce que** les regroupements auto-consommateurs (R1, R2) sont consultés selon un ordre de consultation modifié au début de chaque période prédéfinie.

13. Procédé selon l'une quelconque des revendications 10 à 12, **caractérisé en ce que**, lorsqu'un premier regroupement auto-consommateur et un deuxième regroupement auto-consommateur comportent une même entité productrice ou consommatrice, ladite entité est consultée avant le deuxième regroupement auto-consommateur.

14. Unité de traitement (30) d'un flux d'énergie électrique produit par au moins un premier groupe d'entités productrices (10) et consommé par ledit premier groupe d'entités productrices et au moins un deuxième groupe d'entités consommatrices (20), **caractérisé en ce qu'**elle met en œuvre au moins partiellement le procédé selon l'une quelconque des revendications 1 à 13 en assurant au moins la détermination de l'ordre de consultation des entités, la gestion de la consultation desdites entités et la vérification du critère de convergence prédéterminé.

15. Réseau d'entités auto-consommatrices d'électricité (R1, R2) mettant en œuvre le procédé selon l'une quelconque des revendications 1 à 13, **caractérisé en ce qu'**il comporte :

   - une pluralité d'entités productrices (10) et d'entités consommatrices (20) connectées localement les unes aux autres, et
   - au moins une unité de traitement (30) d'un flux d'énergie électrique selon la revendication 14, connectée à chacune des entités consommatrices et productrices.

16. Réseau d'entités auto-consommatrices d'électricité selon la revendication 15, **caractérisé en ce qu'**il est relié au réseau de distribution général d'électricité (R3).

17. Programme d'ordinateur, **caractérisé en ce qu'**il comprend des instructions qui, lorsqu'elles sont exécutées par une unité de traitement (30) d'un flux d'énergie électrique, sont propres à mettre en œuvre le procédé selon l'une quelconque des revendications 1 à 13 pour gérer automatiquement le flux d'énergie électrique produit par au moins un premier groupe d'entités productrices (10) et consommé par ledit premier groupe d'entités productrices et au moins un deuxième groupe d'entités consommatrices (20).

**Patentansprüche**

1. Verfahren zur automatischen Verwaltung eines elektrischen Energieflusses, der von mindestens einer ersten Gruppe von produzierenden Einheiten (10) erzeugt und von dieser ersten Gruppe von produzierenden Einheiten (10) und mindestens einer zweiten Gruppe von Verbrauchereinheiten (20) verbraucht wird, wobei jede Einheit jeder Gruppe zu Beginn eines vorbestimmten Zeitraums eine Prognose der Produktion und/oder eine Prognose des Verbrauchs von elektrischer Energie für den vorbestimmten Zeitraum bestimmt, wobei das Verfahren **dadurch gekennzeichnet ist, dass** es die folgenden Operationen umfasst:

   - a) für jede Gruppe eine Reihenfolge festlegen, in der die Einheiten der Gruppe abgefragt werden (110),
   - b) Abfragen der produzierenden Einheiten (120) in der in Schritt a) bestimmten Reihenfolge, wobei jede produzierende Einheit eine Restproduktionsprognose berechnet, die ihre eigene Produktionsprognose, eine von einer vorhergehenden Einheit übermittelte Restproduktionsprognose und einen Teil einer Verbrauchsprognose, die durch die Restproduktionsprognose eingespeist werden kann, berücksichtigt, und diese Restproduktionsprognose an die nächste produzierende Einheit in der bestimmten Reihenfolge übermittelt,
   - c) Wiederholen von Schritt b), solange noch nicht alle produzierenden Einheiten (10) abgefragt wurden (130),
   - d) wenn die Restproduktionsprognosen überschüssig sind (140), Übermitteln der Restproduktionsprognosen an die Gruppe der Verbrauchereinheiten (20),
   - e) Abfragen der Verbrauchereinheiten (150) gemäß der in Schritt a) bestimmten Reihenfolge, wobei jede Verbrauchereinheit die Prognose der Restproduktion unter Berücksichtigung der von der vorhergehenden Einheit übermittelten Prognose der Restproduktion und ihres Anteils an der Prognose des Verbrauchs, der eingespeist werden kann, berechnet und an die nächste Verbrauchereinheit gemäß der bestimmten Reihenfolge übermittelt,
   - f) Wiederholung von Schritt e), solange noch nicht alle Verbrauchereinheiten abgefragt wurden (160),
   - g) Wiederholen der Schritte b) bis f), solange ein vorbestimmtes Konvergenzkriterium nicht erreicht wurde (170).

2. Verfahren nach Anspruch 1, **dadurch gekennzeichnet, dass** Schritt b) die folgenden Schritte umfasst:

   - eine kumulierte Produktionsprognose berechnen, die ihrer Produktionsprognose zuzüglich einer eventuellen, von einer vorherigen Einheit übermittelten Restproduktionsprognose entspricht,
   - einen Teil seiner Verbrauchsprognose identifizieren, der aus dieser kumulierten Produktionsprognose eingespeist werden kann,

- eine Restproduktionsprognose berechnen, die der kumulierten Produktionsprognose abzüglich des Teils seiner Verbrauchsprognose entspricht, der eingespeist werden kann,

- eine Restverbrauchsprognose berechnen, die ihrer Verbrauchsprognose abzüglich des Teils ihrer Verbrauchsprognose entspricht, der eingespeist werden kann, zuzüglich einer eventuellen Restverbrauchsprognose, die von einer vorherigen Einheit übermittelt wurde, und

- die berechneten Produktionsprognosen und Restverbrauchsprognosen in der festgelegten Reihenfolge an die nächste produzierende Einheit weiterleiten;

und dadurch, dass Schritt e) die folgenden Schritte umfasst:

- einen Teil seiner Verbrauchsprognose identifizieren, der durch die von der vorherigen Einheit übermittelte Restproduktionsprognose eingespeist werden kann,

- die Restproduktionsprognose berechnen, die der von der vorherigen Einheit übermittelten Restproduktionsprognose abzüglich des Teils ihrer Verbrauchsprognose entspricht, der eingespeist werden kann,

- die Restverbrauchsprognose berechnen, die ihrer Verbrauchsprognose abzüglich des Teils ihrer Verbrauchsprognose, der eingespeist werden kann, zuzüglich einer eventuellen Restverbrauchsprognose, die von einer vorherigen Einheit übermittelt wurde, entspricht, und

- die berechneten Produktionsprognosen und Restverbrauchsprognosen in der festgelegten Reihenfolge an die nächste Verbrauchereinheit weiterleiten.

3. Verfahren nach Anspruch 1 oder 2, bei dem die erste und die zweite Gruppe von Einheiten mit einem allgemeinen Stromverteilungsnetz (R3) verbunden sind, **dadurch gekennzeichnet, dass** es nach mindestens einem vorbestimmten Zeitraum die Erstellung einer Energiebilanz (200) umfasst, die auf einem Vergleich für jede Einheit jeder Gruppe zwischen den Produktionsprognosen und der tatsächlichen Produktion und/oder zwischen den Verbrauchsprognosen und dem tatsächlichen Verbrauch der Einheit beruht.

4. Verfahren nach Anspruch 3, **dadurch gekennzeichnet, dass** die Erstellung der Energiebilanz (200) die folgenden Schritte umfasst:

- l) Abfragen jeder produzierenden Einheit (220) in der in Schritt a) festgelegten Abfragereihenfolge, wobei jede produzierende Einheit

o die kumulierte tatsächliche Produktion berechnet, die ihrer tatsächlichen Produktion zuzüglich der von der vorherigen Einheit übermittelten eventuellen tatsächlichen Restproduktion entspricht

o einen Teil ihres tatsächlichen Verbrauchs identifiziert, der aus dieser kumulierten tatsächlichen Produktion eingespeist werden kann

o die tatsächliche Restproduktion berechnet, die der kumulierten tatsächlichen Produktion abzüglich des Teils ihres tatsächlichen Verbrauchs entspricht, der eingespeist werden kann

o den tatsächlichen Restverbrauch berechnet, der ihrem tatsächlichen Verbrauch abzüglich des Teils ihres tatsächlichen Verbrauchs, der eingespeist werden kann, entspricht, zuzüglich eines eventuellen tatsächlichen Restverbrauchs, der von der vorherigen Einheit übermittelt wurde

o die tatsächliche Restproduktion und den tatsächlichen Restverbrauch an die nächste produzierende Einheit in der Reihenfolge der Abfrage übermittelt,

- m) Wiederholung von Schritt b), solange noch nicht alle produzierenden Einheiten abgefragt wurden (230),

- n) Abfragen der Verbrauchereinheiten (250) gemäß der in Schritt a) bestimmten Abfragereihenfolge, wobei jede Verbrauchereinheit den tatsächlichen Restverbrauch der Verbrauchereinheit und die tatsächliche Restproduktion bestimmt und den tatsächlichen Restverbrauch und die tatsächliche Restproduktion an die nächste Verbrauchereinheit gemäß der Abfragereihenfolge weiterleitet,

- o) Wiederholung von Schritt n), solange noch nicht alle Verbrauchereinheiten abgefragt wurden (260), und

- p) die Energiebilanz (280) erstellen, in der für jede der produzierenden und verbrauchenden Einheiten die Menge der von den produzierenden Einheiten gelieferten verbrauchten elektrischen Energie und die Menge der vom Stromverteilungsnetz gelieferten verbrauchten elektrischen Energie angegeben sind.

5. Verfahren nach einem der Ansprüche 1 bis 4, **dadurch gekennzeichnet, dass** die in Schritt a) bestimmte Reihenfolge, in der die Einheiten abgefragt werden, zu jedem Beginn eines vorbestimmten Zeitraums geändert wird.

6. Verfahren nach Anspruch 5, **dadurch gekennzeichnet, dass** die Abfragereihenfolge zufällig ausgewählt wird.

**7.** Verfahren nach einem der Ansprüche 1 bis 6, **dadurch gekennzeichnet, dass** die Verbrauchsprognosen von jeder der produzierenden und verbrauchenden Einheiten in Abhängigkeit von den Produktionsprognosen und/oder den von der vorherigen Einheit übermittelten Restproduktionsprognosen optimiert werden.

**8.** Verfahren nach einem der Ansprüche 1 bis 7, **dadurch gekennzeichnet, dass** die Verbrauchsprognosen von jeder der produzierenden und verbrauchenden Einheiten optimiert werden, indem im Laufe der Zeit der geeignetste Verbrauchszeitpunkt in Abhängigkeit von den Produktionsprognosen und/oder den von der vorhergehenden Einheit übermittelten Restproduktionsprognosen gewählt wird.

**9.** Verfahren nach einem der Ansprüche 1 bis 8, **dadurch gekennzeichnet, dass**, wenn die prognostizierte Restproduktion größer ist als der prognostizierte Restverbrauch der Gruppen von produzierenden und verbrauchenden Einheiten, die tatsächlich produzierte elektrische Energie in einer Speichervorrichtung gespeichert wird, um später verbraucht zu werden.

**10.** Verfahren nach einem der Ansprüche 3 bis 9, **dadurch gekennzeichnet, dass** mehrere selbstverbrauchende Cluster (R1, R2), die jeweils mindestens eine erste Gruppe von produzierenden Einheiten (10) und mindestens eine zweite Gruppe von verbrauchenden Einheiten (20) umfassen, verbunden sind, um den Strom elektrischer Energie, der von den ersten Gruppen von produzierenden Einheiten erzeugt wird, selbstverbrauchender Cluster für selbstverbrauchender Cluster zu teilen, indem die Schritte a) bis g) und l) bis p), wenn die prognostizierte Restproduktion eines der selbstverbrauchenden Cluster größer ist als die Verbrauchsprognose dieses selbstverbrauchenden Clusters.

**11.** Verfahren nach Anspruch 10, **dadurch gekennzeichnet, dass** es einen Vorgang zur Erstellung einer Gesamtbilanz umfasst, die für jeden der selbstverbrauchenden Cluster die Menge an verbrauchter elektrischer Energie, die von den selbstverbrauchenden Clustern geliefert wird, und die Menge an verbrauchter elektrischer Energie, die vom Stromverteilungsnetz geliefert wird, angibt.

**12.** Verfahren nach Anspruch 10 oder 11, **dadurch gekennzeichnet, dass** die selbstverbrauchenden Cluster (R1, R2) in einer zu Beginn jedes vordefinierten Zeitraums veränderten Abfragereihenfolge abgefragt werden.

**13.** Verfahren nach einem der Ansprüche 10 bis 12, **dadurch gekennzeichnet, dass**, wenn ein erster selbstverbrauchender Cluster und ein zweiter selbstverbrauchender Cluster dieselbe produzierende oder konsumierende Einheit enthalten, diese Einheit vor dem zweiten selbstverbrauchenden Cluster abgefragt wird.

**14.** Einheit (30) zur Verarbeitung eines elektrischen Energieflusses, der von mindestens einer ersten Gruppe von produzierenden Einheiten (10) erzeugt und von der ersten Gruppe von produzierenden Einheiten und mindestens einer zweiten Gruppe von Verbrauchereinheiten (20) verbraucht wird, **dadurch gekennzeichnet, dass** sie mindestens teilweise das Verfahren nach einem der Ansprüche 1 bis 13 umsetzt, indem sie mindestens die Bestimmung der Abfragereihenfolge der Einheiten, die Verwaltung der Abfragung der Einheiten und die Überprüfung des vorgegebenen Konvergenzkriteriums gewährleistet.

**15.** Netzwerk von selbst Strom verbrauchenden Einheiten (R1, R2), das das Verfahren nach einem der Ansprüche 1 bis 13 durchführt, **dadurch gekennzeichnet, dass** es umfasst:

- eine Vielzahl von produzierenden Einheiten (10) und verbrauchenden Einheiten (20), die lokal miteinander verbunden sind, und
- mindestens eine Einheit (30) zur Verarbeitung eines elektrischen Energieflusses nach Anspruch 14, die mit jeder der verbrauchenden und produzierenden Einheiten verbunden ist.

**16.** Netzwerk von selbst Strom verbrauchenden Einheiten nach Anspruch 15, **dadurch gekennzeichnet, dass** es mit dem allgemeinen Stromverteilungsnetz (R3) verbunden ist.

**17.** Computerprogramm, **dadurch gekennzeichnet, dass** es Anweisungen umfasst, die, wenn sie von einer Verarbeitungseinheit (30) eines elektrischen Energieflusses ausgeführt werden, geeignet sind, das Verfahren nach einem der Ansprüche 1 bis 13 auszuführen, um den elektrischen Energiefluss, der von mindestens einer ersten Gruppe von produzierenden Einheiten (10) erzeugt und von der ersten Gruppe von produzierenden Einheiten und mindestens einer zweiten Gruppe von verbrauchenden Einheiten (20) verbraucht wird, automatisch zu verwalten.

**Claims**

**1.** Method for the automatic management of a flow of electrical energy produced by at least one first group of prosumers (10) and consumed by said first group of prosumers (10) and at least one second group of consumers (20), wherein each entity of each group determines, at the beginning of a predetermined period, a production forecast and/or a consumption forecast of electrical energy for the predetermined period, the method being **characterized in that** it comprises the following operations:

- a) determining, for each group, an order for consulting the entities of the group (110),
- b) consulting the prosumers (120) according to the order determined in step a), each prosumer calculating a residual production forecast taking account of its own production forecasts, a residual production forecast transmitted by a preceding entity and a portion of a consumption forecast that can be supplied by the residual production forecast, and transmitting this residual production forecast to the prosumer according to the determined order,
- c) reiterating step b) as long as all the prosumers (10) have not been consulted (130),
- d) when the residual production forecasts are in surplus (140), transmitting said residual production forecasts to the group of consumers (20),
- e) consulting the consumers (150) according to the order determined in step a), each consumer calculating and transmitting, to the consumer according to the determined order, the residual production forecast taking account of the residual production forecast transmitted by the preceding entity and of its portion of consumption forecast that can be supplied,
- f) reiterating step e) as long as all the consumers have not been consulted (160),
- g) reiterating steps b) to f) as long as a predetermined convergence criterion has not been reached (170).

2. Method according to claim 1, **characterised in that** step b) comprises the following operations:

- calculating an aggregate production forecast that corresponds to its production forecasts added to any residual production forecast transmitted by a preceding entity,
- identifying a portion of its consumption forecast that can be supplied by this aggregate production forecast,
- calculating a residual production forecast that corresponds to the aggregate production forecast less the portion of its consumption forecast that can be supplied,
- calculating a residual consumption forecast that corresponds to its consumption forecast less the portion of its consumption forecast that can be supplied, added to any residual consumption forecast transmitted by a preceding entity, and

- transmitting to the prosumer according to the determined order, the calculated residual production forecasts and consumption forecasts;

and **in that** step e) comprises the following operations:

- identifying a portion of its consumption forecast that can be supplied by the residual production forecast transmitted by the preceding entity,
- calculating the residual production forecast that corresponds to the residual production forecast transmitted by the preceding entity less the portion of its consumption forecast that can be supplied,
- calculating the residual consumption forecast that corresponds to its consumption forecast less the portion of its consumption forecast that can be supplied, added to any residual consumption forecast transmitted by a preceding entity, and
- transmitting to the consumer according to the determined order, the calculated residual production forecasts and consumption forecasts.

3. Method according to claim 1 or 2, wherein the first and the second groups of entities are connected to a general electricity distribution network (R3), **characterised in that** it comprises, at the end of at least one predetermined period, the establishing of an energy assessment (200) based on a comparison, for each entity if each group, between the production forecasts and the actual production and/or between the consumption forecasts and the actual consumption of the entity.

4. Method according to claim 3, **characterised in that** the establishing of the energy assessment (200) comprises the following operations:

- l) consulting each prosumer (220) according to the order for consulting determined in step a), each prosumer

  ○ calculating the aggregate actual production that corresponds to its actual production added to any actual residual production transmitted by the preceding entity
  ○ identifying a portion of its actual consumption that can be supplied by this aggregate actual production
  ○ calculating the actual residual production that corresponds to the aggregate actual production less the portion of its actual consumption that can be supplied
  ○ calculating the residual actual consumption that corresponds to its actual consumption less the portion of its actual consumption that can be supplied, added to any residual actual consumption transmitted by the preceding entity

◦ transmitting said actual residual production and said actual residual consumption to the next prosumer according to the order for consulting,

- m) reiterating step b) as long as all the prosumers have not been consulted (230),
- n) consulting the consumers (250) according to the order for consulting determined in step a), each consumer determining the actual residual consumption of said consumer and the actual residual production, and transmitting said actual residual consumption and the actual residual production to the next consumer according to the order for consulting,
- o) reiterating step n) as long as all the consumers have not been consulted (260), and
- p) establishing the energy assessment (280) that indicates, for each one of the prosumers and consumers, the quantity of electrical energy consumed supplied by the prosumers and the quantity of electrical energy consumed supplied by the electricity distribution network.

5. Method according to any of claims 1 to 4, **characterised in that** the order for consulting the entities determined in step a) is modified at the beginning of each predetermined period.

6. Method according to claim 5, **characterised in that** the order for consulting is chosen randomly.

7. Method according to any of claims 1 to 6, **characterised in that** the consumption forecasts are optimised by each one of the prosumers and consumers according to the production forecasts and/or residual production forecasts transmitted by the preceding entity.

8. Method according to any of claims 1 to 7, **characterised in that** the consumption forecasts are optimised by each one of the prosumers and consumers by choosing, over time, the most appropriate moment of consumption according to the production forecasts and/or residual production forecasts transmitted by the preceding entity.

9. Method according to any of claims 1 to 8, **characterised in that**, when the residual production forecasts are higher than the residual consumption forecasts of the groups of prosumers and consumers, the electrical energy actually produced is stored in a storage device in order to be consumed thereafter.

10. Method according to any of claims 3 to 9, **charac-**

**terised in that** several pools (R1, R2), each comprising at least one first group of prosumers (10) and at least one second group of consumers (20), are connected to share the flow of electrical energy produced by the first groups of prosumers by applying, pool by pool, steps a) to g) and l) to p) when the residual production forecasts of one of the pools are higher than the consumption forecasts of said pool.

11. Method according to claim 10, **characterised in that** it comprises an operation of establishing a global assessment that indicates, for each one of the pools, the quantity of electrical energy consumed supplied by the pools and the quantity of electrical energy consumed supplied by the electricity distribution network.

12. Method according to claim 10 or 11, **characterised in that** the pools (R1, R2) are consulted according to an order for consulting modified at the beginning of each predefined period.

13. Method according to any of claims 10 to 12, **characterised in that**, when a first pool and a second pool comprise the same prosumer or consumer, said entity is consulted before the second pool.

14. Unit for processing (30) a flow of electrical energy produced by at least one first group of prosumers (10) and consumed by said first group of prosumers and at least one second group of consumers (20), **characterised in that** it implements at least partially the method according to any one of claims 1 to 13 by providing at least the determining of the order for consulting the entities, the management of the consultation of said entities and the verification of the predetermined convergence criterion.

15. Network of electricity self-consumption entities (R1, R2) implementing at least partially the method according to any one of claims 1 to 13, **characterised in that** it comprises:

- a plurality of prosumers (10) and consumers (20) connected locally to one another, and
- at least one unit for processing (30) a flow of electrical energy according to claim 14, connected to each one of the consumers and prosumers.

16. Network of electricity self-consumption entities according to claim 15, **characterised in that** it is connected to the general electricity distribution network (R3).

17. Computer program, **characterised in that** it comprises instructions that, when they are executed by a unit for processing (30) a flow of electrical energy, are able to implement the method according to any of claims 1 to 13 to automatically manage the flow of electrical energy produced by at least one first group of prosumers (10) and consumed by said first group of prosumers and at least one second group of consumers (20).

**Fig. 1**

**Fig. 2**

# Fig. 3

R1

| Entité productrice | Prévision de production | ⇒ | Prévision production surplus |

Prévision de production ⇒ Prévision production surplus

Prévision de consommation ⇒ Prévision consommation sur le réseau

| Entité consommatrice |

Prévision de consommation ⇒ Prévision production surplus

Transactions de R1

⇩

⇩

R2

Transfert vers R2

| Entité productrice | ⇒ | Prévision de consommation

Prévision de surplus |

Prévision de consommation

Prévision de surplus

| Entité consommatrice |

Reboucler la négociation si critère de convergence non_atteint

# Fig. 4

**Fig. 5**

200

Début bilan
énergétique

Consulter production réelle
Et consommation réelle
des entités productives

220

Toutes les entités consultées
?

non

oui

230

Consulter consommation réelle
des entités consommatrices

250

260

Toutes les entités consultées
?

non

oui

Bilan énergétique pour la/les
périodes prédéterminées

280

# Fig. 6

# Fig. 7

# Fig. 8

| Paramètres | Selon AA | Selon invention |
|---|---|---|
| | Un seul niveau | Plusieurs niveaux |
| Autoconsommation (%) | 58,09 | 81,42 |
| En autonomie (%) | 30,33 | 53,40 |
| Consommation totale réseau de distribution générale (kWh) | 370,76 | 282,96 |
| Consommation totale réseau d'entités autoconsommatrices (kWh) | 265,88 | 340,78 |
| Electricité générée en excès (kWh) | 152,66 | 77,77 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PLAZA CAROLINE** ; **JULIEN GIL** ; **FRANCOIS DE CHEZELLES** ; **KARL AXEL STRANG**. Distributed Solar Self-Consumption and Blockchain Solar Energy Exchanges on the Public Grid Within an Energy Community. *IEEE International Conference on Environment and Electrical Engineering et IEEE Industrial and Commercial Power Systems Europe (EEEIC / I&CPS Europe)*, 2018

- **VERSCHAE RODRIGO** ; **TAKEKAZU KATO** ; **HIROAKI KAWASHIMA** ; **TAKASHI MATSUYAMA**. A Cooperative Distributed Protocol for Coordinated Energy Management in Prosumer Communities. *Technical Report of IEICE*, December 2015

- **SOLÈNE GOY et al.** Load Management in Buildings. *Urban Energy Systems for Low-Carbon Cities (excerpt)*, 30 November 2018, 1-6